# EUROPEAN PATENT APPLICATION

(11) **EP 3 955 403 A1**
(43) Date of publication of application: **16.02.2022**
(21) Application number: 21199134.4
(22) Date of filing: 28.06.2018
(51) Int. Cl.: H02G 3/14

(54) **COVER ELEMENT AND COVER PLATE FOR WALL-MOUNTING OF MODULAR ELECTRIC APPARATUSES**

(30) Priority: 24.07.2017 IT 201700084107
(62) Divisional of application: 18749529.6
(71) Applicant: BTICINO S.P.A., 21100 Varese, (IT)
(72) Inventor: BROGIOLI, MARCO, 21100 VARESE (IT); ROCERETO, Pietro, 21100 VARESE (IT)
(74) Representative: Carangelo, Pierluigi

(57) **Abstract**

A cover element (10, 11, 12) of a wall-installable modular electric apparatus (3), comprising:
- a plate-shaped body (200);
- coupling elements (230) fixed to the plate-shaped body (200), adapted and configured for mechanically coupling the cover element (10, 11, 12) to a cover plate (1) for modular electric apparatuses comprising a base body (100), wherein said coupling elements allow the plate-shaped body (200) to be constrained to the base body (100) so that said plate-shaped body (200) can move with respect to the base body (100) between two opposite stroke end positions, in one of which the plate-shaped body (200) is relatively closer to the base body (100) and in the other of which the plate-shaped body (200) is relatively further away from the base body (100);
- alignment means (211, 231) adapted to be operatively interposed between the cover element (10, 11, 12) and the base body (200) to keep the plate-shaped body (200) in the stroke end position in which it is relatively further away from the base body (100) in the absence of external forces.

## Description

The present invention relates to the technical field of devices for wall-mounting modular electrical apparatuses and, more in particular, relates to a cover element and to a cover plate for wall-mounting modular electrical apparatuses.

For the purposes of the present description, modular electrical apparatus indicates, in general, any electrical means or device generally belonging to electrical installations in residential buildings and the like and which is usually intended to be mounted on, e.g. embedded in, walls of such buildings by the side of other modular electrical apparatuses.

Therefore, this definition includes, not but is not limited to, switches, power sockets, data network sockets, TV sockets, telephone sockets, pushbuttons, switches, multiway switches, control electrical devices in general, connectors, thermostats, timers, fuse holders, ringers/buzzers, emergency lights, e.g. removable, signaling lights, e.g. step markers, displays, e.g. LCDs, and the like.

As known, the modular electrical apparatuses mentioned above are usually installed on a wall forming composite mounting structures or groups of parts, generally including:
- a plurality of modular electrical apparatuses;
- a box intended to be embedded in the wall;
- a supporting frame which can be fixed to the box, either directly or via adapters, called mud rings, and adapted to support the plurality of modular electrical apparatuses arranged mutually side-by-side; and
- a cover plate which can be fixed to the supporting frame and is provided with a through opening for allowing a user to access, either visually or manually, the modular electrical apparatuses installed on the supporting frame.

The aforesaid groups of parts are often named "electrical points".

In the electrical points indicated above, the cover plate is used both to ensure a minimum protection for electrical apparatuses, e.g. from dust, and to prevent dangerous access (e.g. by means of sharp objects) to the electrically conductive parts of electrical apparatuses. A further purpose of the cover plate is also to act as a shield to prevent an output towards the outside of electrical arcs, flames, incandescent wires in order to prevent starting fires.

Another important task of the cover plate is to mask flaws produced, for example, by the presence of a cavity in the wall and by the presence of the box and of the mounting frame which, rather than having aesthetic value, have a functional value difficult to reconcile with requirements or principles of aesthetic.

In the aforesaid electrical points, a front portion of the modular electrical apparatus protrudes from the supporting frame and crosses at least in part the through opening of the cover plate. Such portion is, for example, an actuating button of a modular switch, such as for example an actuating pushbutton or the front closing element of an electrical socket. This structural solution shows a drawback in that misalignments are often visible in electrical points between the modular electrical apparatuses and the cover plate because the modular electrical apparatuses are fixed to the supporting frame and the cover plates are not always aligned with the respective supporting frames due to imperfections of the installation wall and/or mechanical tolerances. These misalignments may cause problems of aesthetic and functional problems.

The present invention aims at offering a solution which can either overcome or reduce at least in part the drawbacks of the cover plates and of the electrical points of the prior art described above.

Such object is achieved by means of a cover element, as defined in the appended claim 1 in its most general form and in the dependent claims in several particular embodiments.

A further aspect of the present invention is to make available a cover plate for wall-mounting modular electrical apparatuses as defined in appended claim 13 and a group of parts as defined in appended claim 14.

The invention will be better understood from the following detailed description of a preferred embodiment, made by way of non-limiting example with reference to the accompanying drawings, in which:
- figure 1 shows an axonometric view with separate parts of an embodiment of an assembly of parts comprising a cover plate for wall-mounting modular electrical apparatuses, wherein the cover plate includes a plurality of first and second cover elements, wherein one of the first cover elements is shown overturned with respect to the remaining ones in figure 1;
- figure 2 shows an axonometric view of the cover plate of the group of parts in figure 1;
- figure 3 shows a front elevation plan view of the cover plate of the group of parts in figure 1;
- figure 4 shows an axonometric view of a possible variant embodiment of the cover plate in figure 2;
- figure 5 shows an axonometric view of a further variant embodiment of the cover plate in figure 2;
- figure 6 shows a front elevation plan view of the cover plate in figure 2 from which two cover elements were removed to make the base body of the cover plate partially visible;
- figure 7 shows a bottom plan view of the cover plate in figure 2 in the configuration in figure 6;
- figure 8A shows a bottom plan view of the base body of the cover plate in figure 1, comprising two mounting crosspieces and two connection uprights;
- figure 8B shows a front elevation plan view of the base body of the cover plate in figure 1;
- figure 9 shows an axonometric view of a first embodiment of one of the second cover elements which can be coupled to a connection upright of figure 8;
- figure 10 shows a first axonometric view of a second embodiment of one of the second cover elements which can be coupled to a connection upright in figure 8;
- figure 11 is a second axonometric view of the cover element in figure 10,
- figure 12 shows an axonometric view of one of the first cover elements which can be coupled to the mounting crosspieces;
- figure 13 shows an axonometric view of the first cover element in figure 12 from which some parts were removed;
- figure 14 shows an axonometric view of one of the parts removed in figure 13 respect to figure 12;
- figure 15 shows an axonometric view of another embodiment of one of the first cover elements;
- figure 16 shows an axonometric view of the first cover element in figure 15 with some parts removed;
- figure 17 shows a rear elevation plan view of the cover plate in figure 6;
- figure 18 shows a section plan view of the group of parts in figure 1 along a plane transverse to the mounting crosspieces, in which the group of parts is in a resting configuration;
- figure 19 shows a section plan view in figure 18, in which the group of parts is in a first actuating configuration;
- figure 20 shows a section plan view in figure 18, in which the group of parts is in a second actuating configuration;
- figure 21 shows a perspective view of a further variant embodiment of the cover plate in figure 2.

Similar or equivalent elements in the figures are indicated by the same reference numerals.

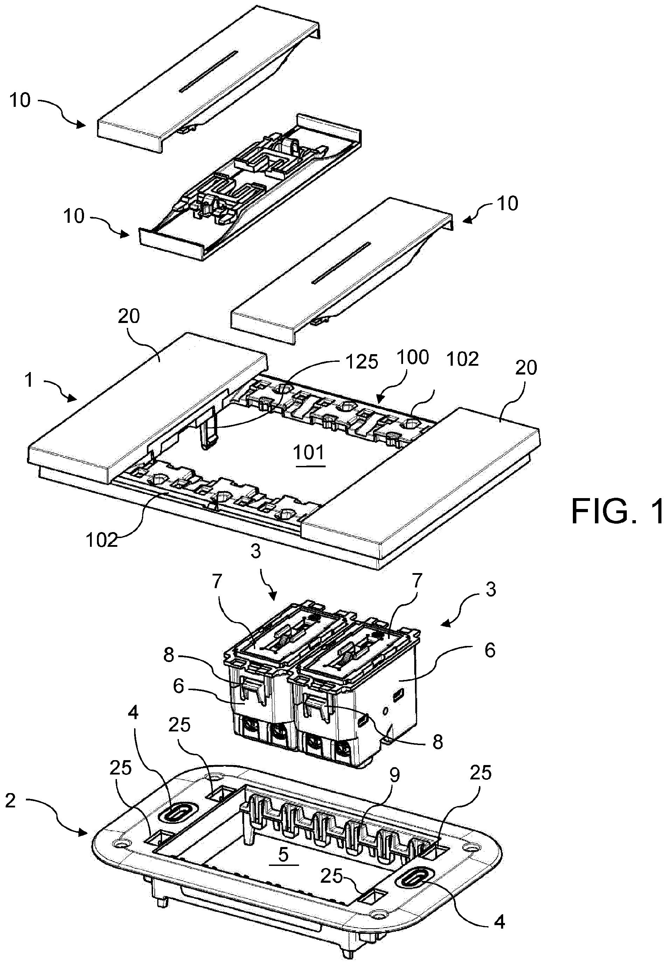

Figure 1 shows a group of parts for wall-mounting modular electrical apparatuses 3, e.g. such as modular switches 3 of a residential electrical installation, e.g. of a domestic electrical system. In the present description, the aforesaid group of parts can also be indicated with the expression "electrical point".

The electrical point comprises a supporting frame 2 intended to be fixed, in the example by means of a pair of screws which can be inserted into respective through holes 4, to a mounting wall or to an electrical box which can be embedded in the wall, not shown in the figures.

Preferably, the supporting frame 2 has a frame-shaped base body, comprising the four frame sides in mutually parallel and opposite in pairs, preferably made of electrically insulating material, e.g. hard plastic. Two of the aforesaid opposite frame sides are provided with interlocking and snap fixing elements 9 to allow the fixing of the modular electrical apparatuses 3 provided with conjugated interlocking and snap fixing elements 8.

The supporting frame 2 comprises an assembly window 5 in which one or more modular electrical apparatuses 3 can be fixed. Preferably, the modular electrical apparatuses 3 can be fixed to the supporting frame 2 by means of the aforesaid conjugated interlocking and snap fixing elements 8. In the non-limiting example in figure 1, the modular electrical apparatuses 3 are three electrical pushbutton switches. Each one comprises a casing 6 and a pushbutton 7, e.g. constrained to the casing 6 so as to be able to slide axially with respect to the casing 6. The casing 6 encloses the electromechanical electrical switching members inside. The casing 6 preferably comprises the aforesaid conjugated interlocking and snap fixing elements 8, which are adapted to engage with the fixing elements 9 of the supporting frame 2. Preferably, the aforesaid conjugated interlocking and snap fixing elements 8 are provided on two opposite outer faces of the casing 6, only one of which is shown in figure 1. A non-limiting example of interlocking and snap fixing system between modular electrical apparatuses and a supporting frame is described in patent publication WO2006123379 A1.

It is worth noting that there is no restriction regarding the number and type of modular electrical apparatuses 3 which can be fixed to the supporting frame 2 with the exception of possible limitations imposed by modularity. By way of non-limiting example only, the following can be fixed to the supporting frame 2 (which in the non-limiting example is for three modules) alternatively to the three electrical pushbutton switches:
- two one-module switches and one one-module electrical socket; or
- two one-module electrical sockets and one one-module switch; or
- one two-module electrical socket (e.g. a Schuko socket) and one one-module electrical switch or electrical socket.

As explained above, in general, the definition of modular electrical apparatus includes, but is not limited to, switches, power sockets, data network sockets, USB sockets, TV sockets, telephone sockets, pushbuttons, switches, multiway switches, control electrical devices in general, connectors, thermostats, timers, fuse holders, ringers/buzzers, emergency lights, e.g. removable, signaling lights, e.g. step markers, displays, e.g. LCDs, and the like.

The supporting frame 2 comprises a plurality of seats or fixing channels 25, preferably defined in the frame-shaped base body so as to allow fixing a cover plate 1 to the supporting frame 2. Preferably, there are four seats or fixing channels 25.

The group of parts further comprises a cover plate 1 adapted and configured to be fixed to the supporting frame 2.

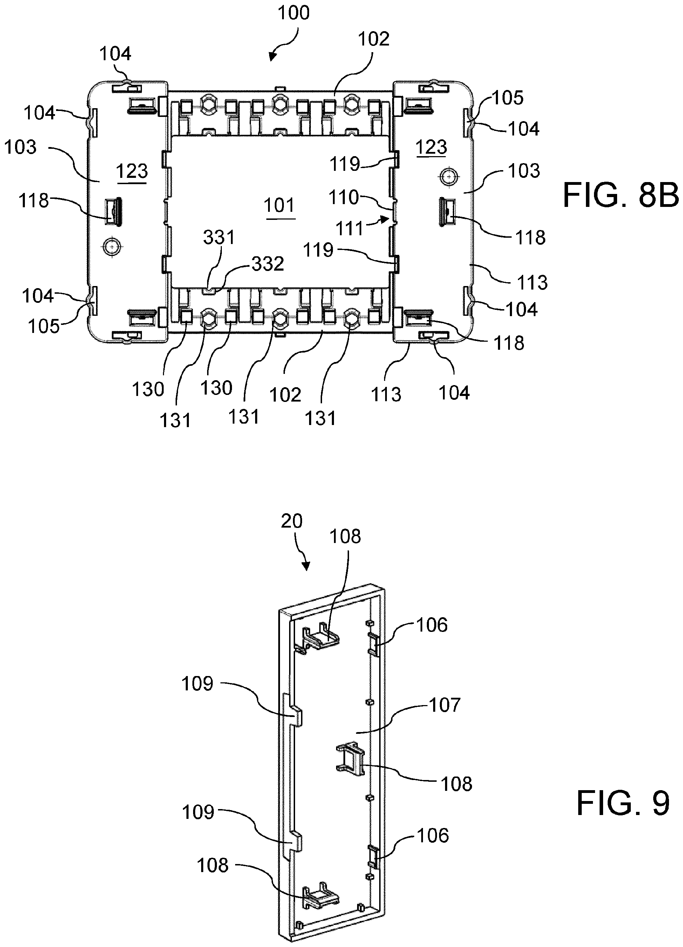

The cover plate 1 comprises a frame-shaped base body 100, shown in greater detail in figure 8B, which extends about a through opening 101.

The cover plate 1 preferably comprises a plurality of fixing teeth 125, four fixing teeth in the example, which protrude from the base body 100 towards the supporting frame 2, each of which is adapted to engage in a respective seat or fixing channel 25. A non-limiting example of fixing system between a cover plate and a supporting frame is described in European patent publication EP1867026 B1.

The base body 100 preferably comprises two mounting crosspieces 102 arranged on opposite sides with respect to the through opening 101, two connection uprights 103 mutually arranged on opposite sides with respect to the through opening 101 and adapted to connect, or which connect, the two mounting crosspieces 102 to each other. For example, the base body 100 is made of plastic material, e.g. by molding. Preferably, the base body 100 forms a single piece.

There may also be more than two connection uprights 103 of the base body 100, e.g. by envisaging one or more intermediate connection uprights, e.g. a central connection upright between the two connection uprights 103 shown in figure 8B.

Furthermore, the cover plate 1 includes a plurality of first cover elements 10,11,12 arranged mutually side-by-side between the connection uprights 103 to cover all or part of the through opening 101. Preferably, each of the first cover elements 10,11,12 can be associated with a respective modular electrical apparatus 3. For example, with reference to figure 1, each of the first three cover elements 10 can be associated with a respective modular electrical apparatus 3, although only two modular electrical apparatuses 3 are shown in figure 1. For the purposes of the present description, the word "associated" means that it can be placed into a functional relationship, e.g. to achieve a functional mechanical and/or electrical interaction, or into a positional relationship, e.g. in an alignment relationship, with a respective modular electrical apparatus 3.

The cover plate 1 comprises coupling elements 230 adapted to mechanically couple the first cover elements 10,11,12 to the mounting crosspieces 102 of the base body 100.

In the cover plate 1, the first cover elements 10,11,12 are preferably superposed on the mounting crosspieces 102 to cover the mounting crosspieces 102 of the frame-shaped base body 100 in addition to through opening 101. Preferably, the first cover elements 10,11,12 frontally cover the mounting crosspieces 102 in their entirety.

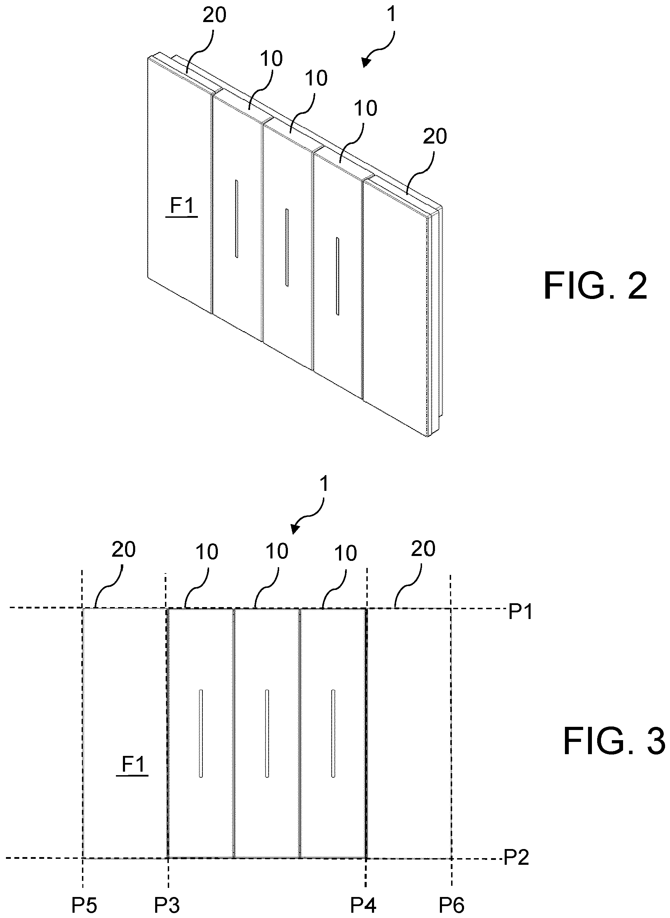

Preferably, the plurality of the first cover elements 10,11,12 defines an array of cover elements having a flat front surface, such as for example the flat front surface shown in figure 3. More preferably, the aforesaid array of cover elements has at least one pair of opposite flat side faces, such as, for example, the opposite faces arranged along the planes P1 and P2 in figure 3 perpendicular to the front face. For example, the aforesaid array of cover elements has two pairs of flat opposite side faces. In figure 3, one of such pairs is formed by the opposite faces arranged along the planes P1 and P2 perpendicular to the front face and the other pair is formed by the opposite faces arranged along the planes P3 and P4 perpendicular to the front face.

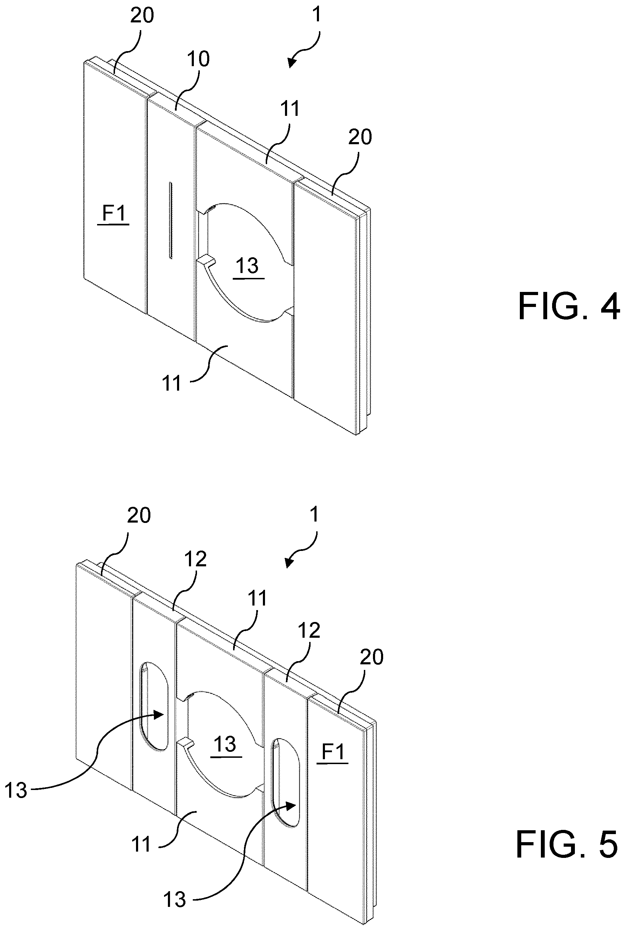

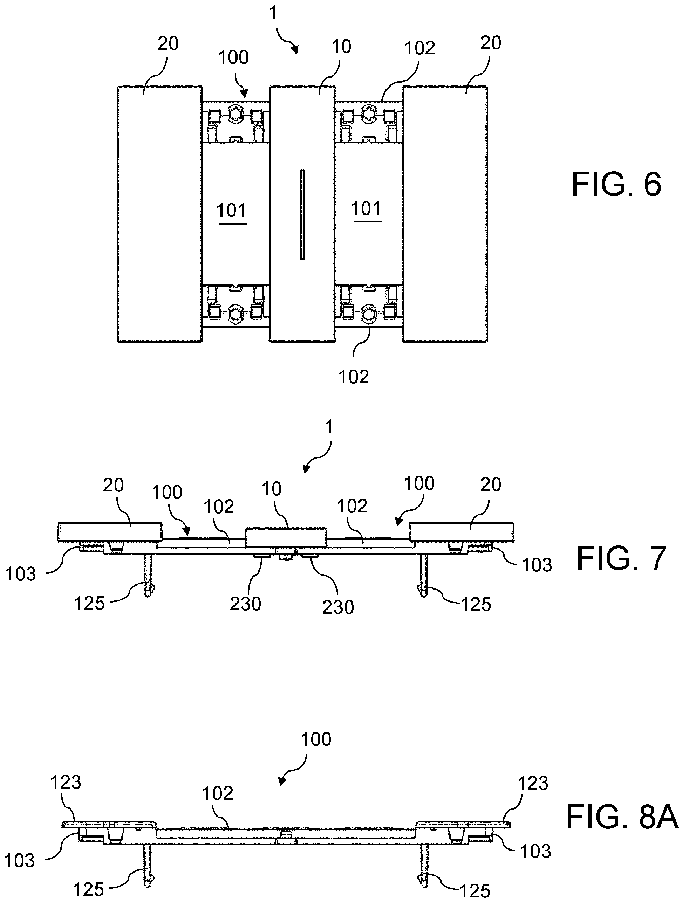

With reference to figure 6, according to an advantageous embodiment, the cover plate 1 comprises at least one first cover element 10 which extends between the mounting crosspieces 102 transversely to the mounting crosspieces 102 over the through opening 101. If such cover element 10 is free from a through window, it may be a simple plug (or a false terminal) or may be an actuation pushbutton of a switch, for example. Figure 5 shows an alternative embodiment of first cover elements 12 which comprise a through window 13 defined in the thickness of the cover element 12, in order to make the covering of a modular electrical apparatus, which is a socket, e.g. an electricity grid socket.

With reference to figures 4 and 5, the first cover elements 11 may be split in two separate parts, each of which can be coupled to a respective mounting crosspiece 102, defining a through window 13 between the two parts, in order to make the cover of a modular electrical apparatus, which is a socket, e.g. a Shuko electrical socket. It is therefore apparent that, for the purposes of the present description, the word "element" when used in the expression "cover element" also contemplates the embodiment of an element which is a "cover assembly", i.e. a functional entity which includes several cover pieces which are physically separated from one another.

Without dwelling on the possible types of first cover elements 10, 11, 12 of the cover plate 1 any further, it is worth noting that such types may comprise continuous plates, as in figures 2 and 3, to make plugs or cover and actuation elements of the modular electrical apparatuses or may be perforated or split plates, as in figure 5, to make socket covers, it being obviously also possible to have various combinations, such as the one shown in figure 4, in which the first cover element 10 is, for example, an actuating pushbutton of a switch (or cover and actuation element) and the first cover element 11 is divided into two parts for covering a Shuko socket.

According to an advantageous, non-limiting embodiment, the cover plate 1 further comprises a plurality of second cover elements 20 comprising a second cover element 20 fixed to one of the connection uprights 103 and a further second cover 20 fixed to the other connection upright 103, each of the second cover elements 20 being such as to cover a respective connection upright 103.

According to an advantageous embodiment, the first cover elements 10,11,12 are interposed between the second cover elements 20. Preferably, the plurality of the first cover elements 10,11,12 defines, together with the plurality of second cover elements 20, an array of cover elements having a flat front surface F1, such as for example the main face F1 shown in figure 3. Said flat front F1 is one of the two main faces of the cover plate 1. More preferably, the aforesaid array of cover elements has at least one pair of opposite flat side faces, such as, for example, the opposite faces arranged along the planes P1 and P2 in figure 3 perpendicular to the front face. For example, the aforesaid array has two pairs of flat opposite side faces. In figure 3, one of such pairs is formed by the opposite faces arranged along the planes P1 and P2 perpendicular to the front face and the other pair is formed by the opposite faces arranged along the planes P5 and P6 perpendicular to the front face.

According to an advantageous embodiment, the second cover elements 20 are fixed to the respective connection uprights 103 by means of fixing elements, which in an advantageous non-limiting embodiment are interlocking and snap fixing elements. With reference to figures 8-11, according to an advantageous embodiment, the interlocking and snap fixing elements comprise elastically deformable elements 104 arranged on one or more peripheral, preferably outer, edges 113 of the connection uprights 103. These elastically deformable elements 104 are preferably made in a single piece with the connection uprights 103, e.g. by injection molding. According to an advantageous embodiment, the elastically deformable elements 104 are arranged adjacent to, e.g. by the side of, a respective through opening 105 defined in the thickness of the connection uprights 103. Preferably, the elastically deformable elements 104 are wave-shaped bars or bridges and have a rounded central portion and two straight opposite end portions.

In accordance with an embodiment, the connection uprights 103 each comprise a fixing plate 123 to which a respective second cover element 20 is fixed. According to an advantageous embodiment, the mounting crosspieces 102 are in retracted position with respect to the fixing plates 123.

According to an advantageous embodiment, the elastically deformable elements 104 are arranged on such fixing plates 123. Preferably, the fixing plates 123 comprise a portion protruding laterally with respect to a remaining portion of the connection upright 103. More preferably, the elastically deformable elements 104 are arranged on such protruding portion.

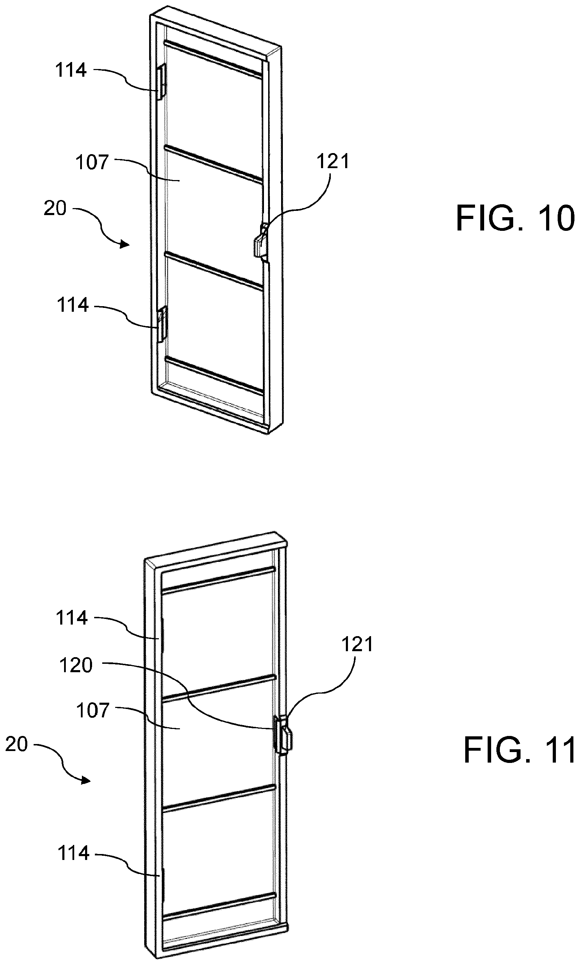

The elastically deformable elements 104 are adapted and configured to engage with seats 106 (shown in figure 9) or projections 114 (shown in figure 10) present on one face 107 of the second cover elements 20 facing towards the associated connection upright 103. Said face 107 in practice is the rear face of the second cover elements 20.

Figure 9 shows a first example of a second cover element 20 which can be conveniently made of plastic, e.g. ABS, which comprises one or more seats 106, equal to two in figure 9, in which respective elastically deformable elements 104 are engaged. In this example, the second cover element 20 further comprises one or more coupling teeth 108, which are three in figure 9, which project from the rear face 107 of the second cover element 20 to be inserted into respective seats or coupling openings 118 defined in the thickness of the connection upright 103, more specifically defined in the thickness of the fixing plates 123. So, it should be noted that in the aforesaid embodiment in figures 8A, 8B and 9, the connection upright 103 comprises a distributed coupling element system comprising at least one coupling element 104 arranged on a peripheral edge 113 and at least one coupling element (in the example, the coupling seats or openings 118) made in the thickness of the connection upright 103 and arranged spaced from the peripheral edge 113.

In the specific example in figure 9, the second cover element 20 also comprises one or more positioning and abutment wings 109 adapted to engage with respective recesses 119 provided on the connection upright 103 and in particular on a peripheral edge opposite to the peripheral edge 113 on which the least one elastically deformable element 104 is arranged.

Figures 10 and 11 show another possible embodiment of a second cover element 20, conveniently made of metallic material or metal alloy, e.g. aluminum or zamak. This cover element 20 comprises at least one projection 114 (two projections 114 are shown in figure 10) adapted to engage with a respective deformable coupling element 104 of the connection upright 103. In order to guarantee a better hold, the second cover element 20 comprises a further projection 120 adapted to engage with a tooth 110 of the connection upright 103 arranged on a peripheral edge opposite to the peripheral edge 113 on which the least one elastically deformable element 104 is arranged. In the example in figures 10 and 11, the second cover element 20 also comprises a positioning wing 121 adapted to be inserted in a counter-shaped seat 111 provided in the aforesaid counter-shaped peripheral edge.

The description provided above with reference to the second cover elements 20 is preferably also applicable in the case in which such cover elements 20 are applied to intermediate connection uprights, if at least one connection upright (not shown in the figures) is interposed between two connection uprights 103 placed on opposite sides of the base body 100.

Some advantageous embodiments of the first cover elements 10, 11, 12 according to the present invention will now be described in greater detail.

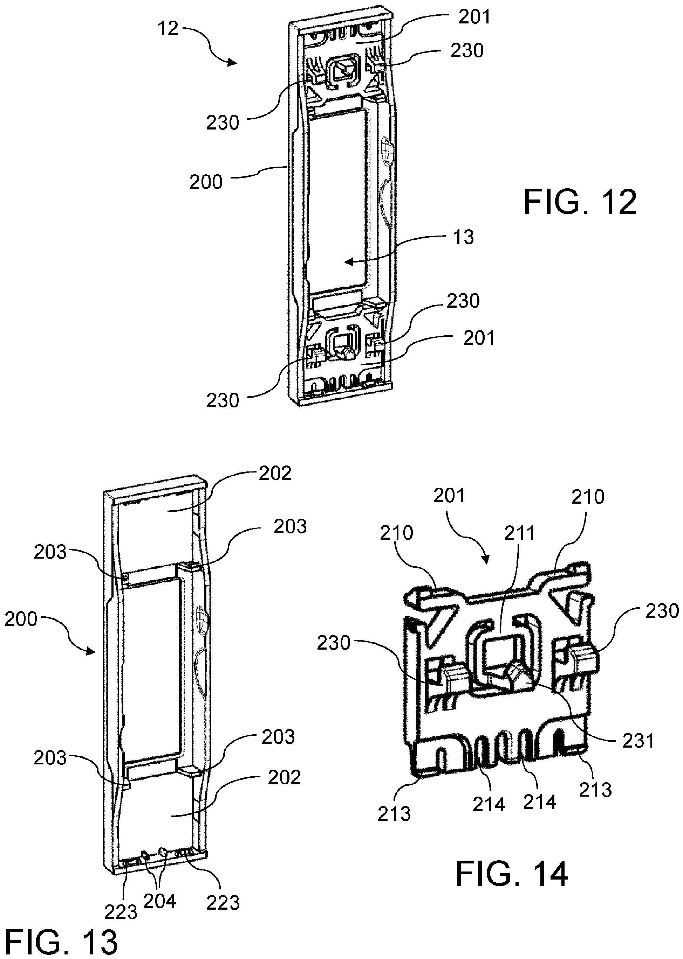

Now making non-limiting reference for the sake of simplicity to the first cover element 12 shown in figure 12, which shows a cover element of a modular apparatus which is an electrical socket, in a first general embodiment the first cover element 12 comprises a plate-shaped body 200 and coupling elements 230 fixed to the plate-shaped body 200, adapted and configured to mechanically couple the cover element 12 to the cover plate 1, and in particular to the base body 100, and more in particular to the mounting crosspieces 102. In accordance with an embodiment, the coupling elements 230 makes it possible to constrain the plate-shaped body 200 of the first cover element 12 to the cover plate 1, so that the plate-shaped body 200 can move with respect to the mounting crosspieces 102 between two opposite stroke end positions, in one of which the plate-shaped body 200 is relatively closer to the mounting crosspieces 102 and in the other of which the plate-shaped body 200 is relatively further from the mounting crosspieces 102. For example, the aforesaid coupling elements 230 comprise snap-coupling teeth, which are four in figure 12, which once inserted in the respective engagement seats 130 defined in a mounting crosspiece 102 allow the first cover element 12 to translate by a given stroke with respect to the cover plate 1, in particular with respect to the base body 100 and more in particular with respect to the mounting crosspiece 102. Such snap-coupling teeth, in order to prevent an accidental detachment of the first cover element 12 from the mounting crosspieces 102, once inserted in the respective engagement seats 130 cannot be pulled out unless forcibly or intentionally.

The first cover element 12 comprises alignment means 211, 231 adapted to be operatively interposed between the first cover element 12 and the cover plate 1, and in particular the base body 100 and more in particular a mounting crosspiece 102, to maintain, in the absence of external forces, the plate-shaped body 200 in the stroke end position, in which it is relatively further away from the cover plate 1, and in particular from the base body 100, and more in particular from the mounting crosspiece 102. Preferably, such alignment means 211, 231 comprise at least one elastic element 211 operatively interposed between the plate-shaped body 200 and the base body 100 and in particular between the plate-shaped body and the mounting crosspiece 102.

Preferably, the alignment means 211, 231 make it possible to obtain an alignment between the plate-shaped body 200 and the base body 100 (and in particular the mounting crosspiece 102) along three mutually perpendicular axes. For example, in order to obtain a three-axial alignment, the alignment means 211, 231 comprise an elastic element 211 adapted to apply a thrust force along an axis and comprise a centering tooth 231 on which the aforesaid elastic element 211 acts and which is wedge-shaped on a transverse plane, e.g. perpendicular, to said axis. In the example, the centering tooth 231 is inserted into a recess 131 with at least in part counter-shaped section provided on the mounting crosspiece 102. The elastic element 211 preferably performs an elastic suspension function for the plate-shaped body 200 of the cover element 12. Preferably, the centering tooth 231 is fixed to the elastic element 211 and more preferably forms a single piece with the latter.

According to an advantageous embodiment, the first cover device 12 comprises a support device 201 of the aforesaid alignment means which can be or is coupled, either reversibly or irreversibly, to the plate-shaped body 200, e.g. by means of a interlocking and snap coupling.

With reference to figures 12-14, according to an advantageous embodiment, both the aforesaid coupling elements 230 and the aforesaid alignment means 211, 231 belong to the support device 201 which can be coupled to the plate-shaped body 200, either reversibly or irreversibly by means of a interlocking and snap coupling. In the particular example shown, both the coupling elements 230 and the alignment means 211, 231 belong to a support device 201 can be fixed to the plate-shaped body 200, preferably in a respective seat 202 defined in the plate-shaped body 200. In the example, such fixing occurs by means of interlocking and snap fixing elements comprising mutually cooperating abutments 203 and elastic elements 210.

Preferably, the first cover element 12 comprises a centering system adapted to center the support device 201 with respect to the plate-shaped body 200, preferably along two or three axes which are perpendicular to one another. In the example in figures 12-14, the centering system is a distributed centering system which also comprises two wings 204 in addition to the abutments 203 and the elastic elements 210, which wings can be inserted in the respective seats 214 and mutually cooperating projecting elements 213,223. The aforesaid centering system makes it possible to contrast a rotation of the support device 201 with respect to the plate-shaped body 200 along an axis perpendicular to the plate body 200 and a translation of the support device 201 with respect to the plate-shaped body 200 along said axis and thus makes it possible to center the support device 201 with respect to the plate-shaped body 200 along three axes perpendicular to one another.

As can be seen in figures 12-14, the first cover element 12 comprises two of the aforesaid mutually opposite support devices 201, each designed to couple the plate-shaped body 200 to a respective mounting crosspiece 102.

Each of the first disjointed cover elements 11 in figures 4 and 5 may also include at least one support device 201 of the type described above. For example, since the first cover element 11 has double modularity, each of its two disjointed parts 11 may comprises two support devices 201 arranged mutually side-by-side to couple with a same mounting crosspiece 102.

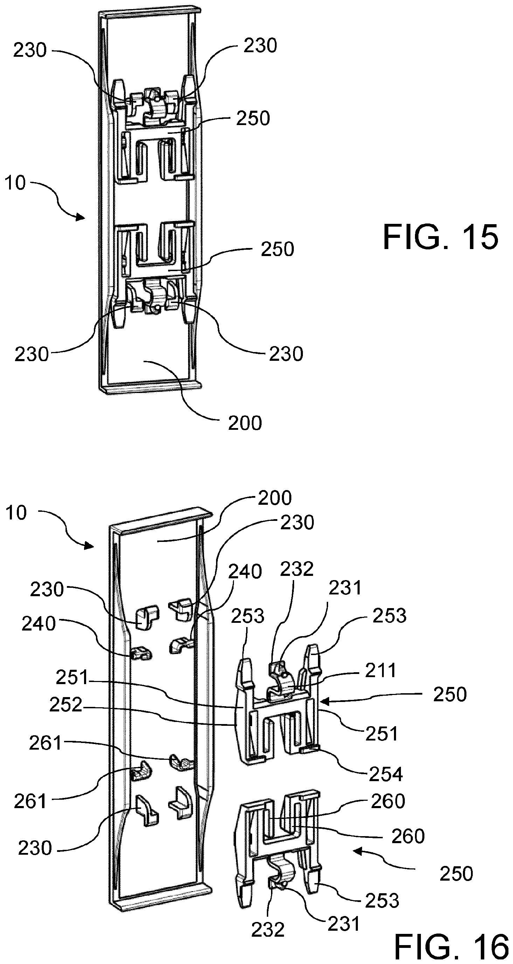

With reference to figures 15-20, a further embodiment of a first cover element 10 will now be described which in this case performs the function of a manual actuation pushbutton of a modular electrical apparatus 3, such as for example a modular pushbutton switch. For this reason, the cover element 10 is a cover and actuation element.

The first cover element 10 comprises a plate-shaped body 200 and coupling elements 230 fixed to the plate-shaped body 200, adapted and configured to mechanically couple the first cover element 12 to the cover plate 1, in particular to the base body 100 and more in particular to the assembly crosspieces 102. According to an embodiment, such coupling elements 230 makes it possible to constrain the plate-shaped body 200 of the first cover element 10 to the cover plate 1, in particular to the base body 100 and more in particular to the mounting crosspieces 102, so that the plate-shaped body 200 can move with respect to the mounting crosspieces 102 preferably between two opposite stroke end positions, in one of which the plate-shaped body 200 is relatively closer to the mounting crosspieces 102 and in the other of which the plate-shaped body 200 is relatively farther from the mounting crosspieces 102. For example, the aforesaid coupling elements 230 comprise snap-coupling teeth which once inserted inside the through hole 101 and that once having crossed the inner edges of the mounting crosspieces 102 pass beyond a snapping position engage with such inner edges, in the respective engagement seats 330 defined in the mounting crosspieces 102, in which said snap-coupling teeth can slide but from which they cannot be pulled out unless forcibly or intentionally in order to prevent an accidental detachment of the cover element 10 from the mounting crosspieces 102.

In the example in figures 15-20, the cover element 10 comprises at least one pressure transmission member 250 operatively coupled to the plate body 200 in order to transmit a pressure force applied to the plate-shaped body 200 to the modular electrical apparatus 3. In the example, the pressure transmission member 250 is coupled to the plate-shaped body 200 by means of two pins 240 which protrude from the plate-shaped body 200 to connect into respective engagement seats of the pressure transmission member 250, not shown in the figures.

In a particularly advantageous embodiment, the aforesaid pressure transmission member 250 comprises at least one stroke multiplier lever 251. In the example in figures 15 and 16, the first cover element 10 comprises two pressure transmission members 250 and each pressure transmission member 250 comprises two stroke multiplier levers 251 parallel and joined together by a connecting bar so as to be mutually integral in movement. For example, the pin engagement seats 240 are defined in the stroke multiplier levers 251.

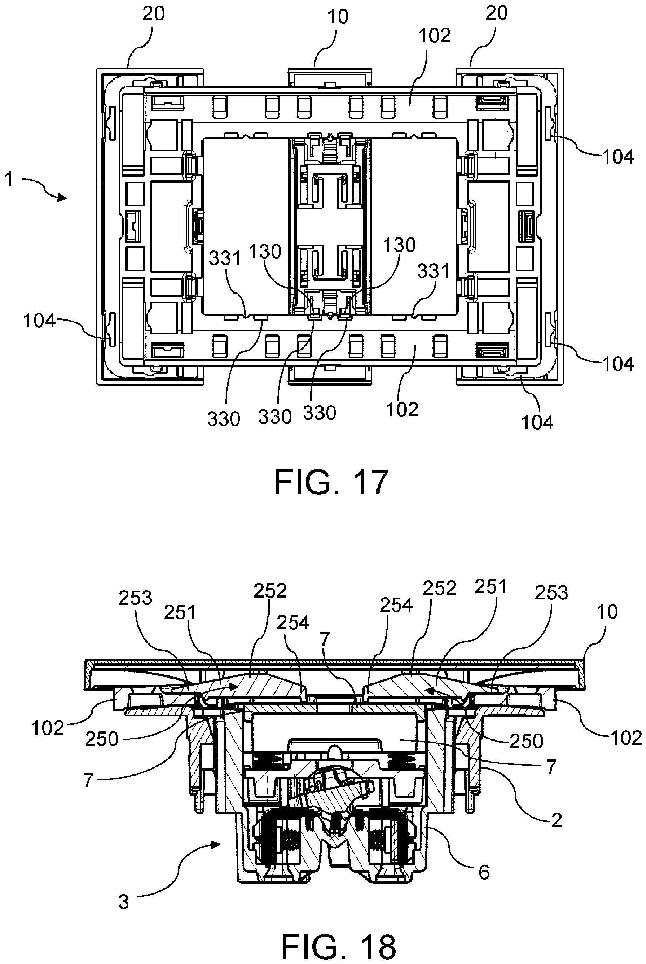

According to an advantageous embodiment, the stroke multiplier lever 251 comprises a fulcrum 252 reacting on the plate-shaped body 200 and two opposite end portions 253, 254 of which one end portion 253 reacts on a mounting crosspiece 102, and the other end portion 254 reacts on a movable portion of the modular electrical apparatus 3, e.g. the pushbutton 7, as shown in figures 18-20.

According to a possible embodiment, the first cover element 10 is coupled to the mounting crosspieces 102 so as to be able to translate with respect to the base body 100. According to a further possible embodiment, the first cover element 10 is coupled to the mounting crosspieces 102 so as to be able to rotate with respect to the base body 100. However, in a further particularly advantageous embodiment, the first cover element 10 is coupled to the mounting crosspieces 102 so as to be able to translate and rotate with respect to the base body 100. In the example in figures 15-20, the coupling elements 230 and the pressure transmission member 250 form a coupling system which allows the first cover element 10 to translate and rotate with respect to the base body 100.

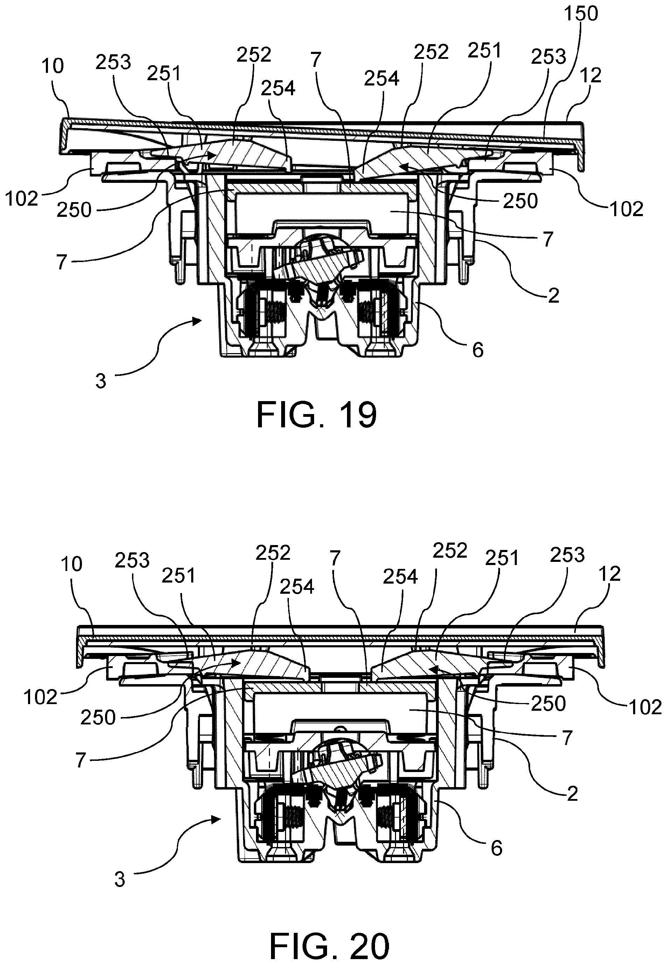

In figure 18, the first cover element 10 is shown in the resting position, in which this is located in the absence of external forces, in particular in absence of manual pressure forces. In figure 19, the first cover element 10 is shown in a first operating actuation condition that this assumes when a pressure force is applied on the cover element 10 on a part thereof which is imbalanced to the right in figure 19, or right end portion 150. A rotation of the first cover element 10 with respect to the position of figure 18 is clearly shown. It is worth noting that the two pressure transmission members 250 are mutually independent, indeed in this case only the member 250 transmits the pressure onto the pushbutton 7. It is also worth noting that the stroke multiplier lever 251 can contain the stroke of the right end portion 150 of the first cover element 10 required to move the pushbutton 7 along its working stroke. Indeed, although the pushbutton 7 is offset with respect to the right end portion 150, a small movement of the right end portion 150 is required with respect to a situation in which there no stroke multiplier lever 251. Since in the example shown the system is symmetrical, the same considerations apply if the pressure force is applied to an end portion of the first cover element 10 opposite to the right end portion 150. In figure 20, the first cover element 10 is shown in a second operating actuation condition that it assumes when a pressure force is applied on the cover element 10 onto its central part. A translation with respect to the position of figure 18 is clearly shown.

It is worth noting that also the first cover element 10 in figures 15-17 comprises alignment means 211, 231 adapted to be operatively interposed between the first cover element 10 and the cover plate 1, and in particular the base body 100 and more in particular the mounting crosspiece 102, to maintain, in the absence of external forces, the plate-shaped body 200 in the stroke end position, in which it is relatively further away from the cover plate 1, and in particular from the base body 100, and more in particular from the mounting crosspiece 102. Preferably, the alignment means 211, 231 comprise at least one elastic element 211 operatively interposed between the plate-shaped body 200 and the base body 100 and in particular the mounting crosspiece 102. In the example, such elastic element 211 is fixed to the pressure transmission member 250 and is preferably made in a single piece therewith.

Preferably, the alignment means 211, 231 make it possible to obtain an alignment between the plate-shaped body 200 and the base body 100 (and in particular the mounting crosspiece 102) along three mutually perpendicular axes. For example, in order to obtain a three-axial alignment, such alignment means 211, 231 an elastic element 211 adapted to apply a thrust force along an axis and comprising a centering tooth 231 on which the aforesaid elastic element 211 acts and which is wedge-shaped on a transverse plane, e.g. perpendicular, to said axis. In the example, the centering tooth 231 is inserted in a recess 131 with an at least partially counter-shaped profile provided on the mounting crosspiece 102. The elastic element 211 preferably performs an elastic suspension function for the plate-shaped body 200 of the cover element 10. Preferably, the centering tooth 231 is fixed to the elastic element 211 and more preferably forms a single piece with the latter. According to an advantageous embodiment, the centering tooth 231 comprises an abutment plate 232 which abuts in a respective seat 332 (figure 8B) defined on an edge of the mounting crosspieces 102 which delimits the through opening 101, i.e. on an inner edge. The pressure transmission member 250 in this case also acts as a support device for the aforesaid alignment means 211, 231. Also in this case, the aforesaid support device is connectable or coupled, reversibly or irreversibly to the plate-shaped body 200. Also in this case, preferably, the first cover element 10 comprises a centering system adapted to center the support device 201 with respect to the plate-shaped body 200, preferably along two or three axes which are perpendicular to one another. In the example of figures 15-17, the centering system is a distributed centering system which comprises for each support device 250 (or pressure transmission member 250) a pair of mutually parallel arms 260 adapted to interfere with a pair of respective abutment walls 261 protruding from the plate-shaped body 200 in order to counteract a rotation of the support device 250 with respect to the plate-shaped body 200 about an axis perpendicular to the main faces of the plate-shaped body 200, and whereby makes it possible to center the support device, i.e. in this case the pressure transmission member 250, with respect to the plate-shaped body 200 along two mutually perpendicular axes. Moreover, by virtue of the provision of the alignment system 211, 231 the plate-shaped body 200 in absence of external forces, i.e. in the situation in figure 18, is aligned with respect to the mounting crosspieces 102 also with respect to a third axis perpendicular to said two axes, so that the plate-shaped body 200 is aligned with respect to the mounting crosspiece 102 along three mutually perpendicular axes.

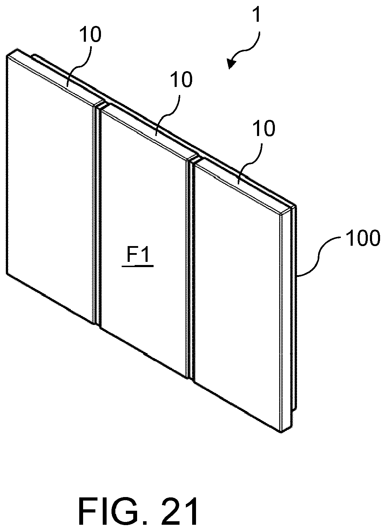

Figure 21 shows a further embodiment of a cover plate 1 in which the first cover element 10 in addition to covering the through opening 101 and the mounting crosspieces 102 are also such as to cover the connection uprights 103, thus either entirely or nearly entirely cover an entire face of the base body 100 of the cover plate 1. In other words, in this embodiment, no second cover elements 20 distinct from the first cover elements 10 are provided.

It is finally worth noting that, although first cover elements 10,11,12 substantially having covering or mechanical actuation functions, the first cover elements 10,11,12 may also have electronic components fitted onboard adapted to control the associated modular electrical apparatus 3 and/or to communicate data with them. The first cover elements 10,11,12 may further comprise sensors and/or electronic displaying devices.

From the description above, it is apparent that a cover element of the type described above can achieve the predetermined objects making it possible to solve both the problems of aesthetic and of function described above with reference to the cover plates of the prior art.

Obviously, a person skilled in art may make further changes and variants to the cover element and to the group of parts described above all without departing from the scope of protection of the invention, as defined in the following claims.

## Claims

1. A cover element (10, 11, 12) of a wallinstallable modular electric apparatus (3), comprising:
- a plate-shaped body (200);
- coupling elements (230) fixed to the plate-shaped body (200), adapted and configured for mechanically coupling the cover element (10, 11, 12) to a cover plate (1) for modular electric apparatuses comprising a base body (100), wherein said coupling elements allow the plate-shaped body (200) to be constrained to the base body (100) so that said plate-shaped body (200) can move with respect to the base body (100) between two opposite stroke end positions, in one of which the plate-shaped body (200) is relatively closer to the base body (100) and in the other of which the plate-shaped body (200) is relatively further away from the base body (100);
- alignment means (211, 231) adapted to be operatively interposed between the cover element (10, 11, 12) and the base body (200) to keep the plate-shaped body (200) in the stroke end position in which it is relatively further away from the base body (100) in the absence of external forces.

2. A cover element (10, 11, 12) according to claim 1, wherein the alignment means (211, 231) comprise at least one elastic element (211) adapted and configured for being operatively interposed between the plate-shaped body (200) and the base body (100).

3. A cover element (10, 11, 12) according to claims 1 or 2, wherein the alignment means (211, 231) allow an alignment along three perpendicular axes to be obtained between the plate-shaped body (200) and the base body (100) .

4. A cover element (10, 11, 12) according to claims 2 or 3, wherein the elastic element (211) is adapted to exert a thrust force along an axis and wherein the alignment means (211, 231) comprise a centering tooth (231) on which the aforesaid elastic element (211) acts and which is wedge-shaped on a plane transverse to said axis.

5. A cover element (10, 11, 12) according to any one of the preceding claims, wherein the first cover element (10, 11, 12) comprises a support device (201, 250) of the aforesaid alignment means (211, 231) which can be or is reversibly or irreversibly coupled to the plate-shaped body (200).

6. A cover element (10, 11, 12) according to claim 5, wherein the support device (201, 250) of the aforesaid alignment means (211, 231) which can be or is reversibly or irreversibly coupled to the plate-shaped body (200) by means of interlocking and snap coupling.

7. A cover element (10, 11, 12) according to claim 6, further comprising a centering system adapted to center the support device (201, 250) with respect to the plate-shaped body (200) along two or three perpendicular axes.

8. A cover element according to any one of claims 5 to 7, comprising two support devices (201, 250) coupled or couplable to the plate-shaped body (200).

9. A cover element (10, 11, 12) according to any one of the preceding claims, wherein the cover element (10) is a switch for actuating a modular electric apparatus (3) and comprises at least a pressure transmission member (250) operatively coupled to the plate-shaped body (200) in order to transmit a pressure force applied to the plate-shaped body (200) to the modular electric apparatus (3) .

10. A cover element (10, 11, 12) according to claims 5 and 9, wherein said pressure transmission member (250) is said support device.

11. A cover element according to claim 5, wherein said coupling elements (230) and said alignment means (211, 231) belong to the support device (201).

12. A cover element (12) according to claim 1, comprising a window (13) defined in the thickness of the cover element (12) for operatively associating the cover element (12) with a modular electric apparatus (3) which is a socket.

13. A cover plate (1) for wall-mounting modular electric apparatuses (3), comprising at least one cover element (10, 11, 12) according to any one of the preceding claims, coupled to the base body (100) by means of said coupling elements.

14. A group of parts for wall-mounting modular electric apparatuses (3), comprising:
- a supporting frame (2), that can be fixed to a wall, having a frame-shaped body which extends about a mounting window (5);
- at least one modular electric apparatus (3) installed in the mounting window (5);
- a cover plate (1) fixed to the supporting frame (2);
- at least one cover element (10, 11, 12) according to any one of claims 1 to 12, operatively associated with said modular electric apparatus (3) and coupled to the base body (100) of the cover plate (1) by means of said coupling elements.
